# EUROPEAN PATENT APPLICATION

(11) **EP 4 372 338 A1**
(43) Date of publication of application: **22.05.2024**
(21) Application number: 22383117.3
(22) Date of filing: 18.11.2022
(51) Int. Cl.: G01J 5/08, G01J 5/07, G01J 5/04, G01J 5/06, G01J 5/0802

(54) **INFRARED SENSOR**

(71) Applicant: Instituto Nacional De Tecnica Aeroespacial "Esteban Terradas", 28850 Torrejón de Ardoz (ES)
(72) Inventor: SEBASTIÁN MARTÍNEZ, Eduardo, 28850 Torrejón de Ardoz (ES); RODRÍGUEZ MANFREDI, José Antonio, 28850 Torrejón de Ardoz (ES); FERRANDIZ GUIBELALDE, Ricardo, 28850 Torrejón de Ardoz (ES)
(74) Representative: TRBL Intellectual Property

(57) **Abstract**

The invention provides an infrared detection device (1), comprising an encapsulation housing (2), a main infrared detector (3) and a secondary infrared detector (4) arranged inside the encapsulation housing (2), a temperature sensor (5) and a control unit (6). The control unit is configured to receive data from the main infrared detector (3), the secondary infrared detector (4) and the temperature sensor (5), and configured to provide an infrared measurement from the obtained data. The encapsulation housing (2) comprises at least an opening structure (7, 7a, 7b, 7c, 7d) intended to allow infrared radiation to enter the detection device (1). The opening structure (7, 7a, 7b, 7c, 7d) is covered by a filter (8) which has a mean transmittance value in a first electromagnetic wavelength range greater than the mean transmittance value outside this first electromagnetic wavelength range. The secondary infrared detector (4) has a treatment which provides a different absorptance in the first electromagnetic wavelength range than the absorptance of the main infrared detector (3) in the first electromagnetic wavelength range, being both absorptances higher than zero.

## Description

### TECHNICAL FIELD

This invention belongs to the field of encapsulated infrared sensors, and their internal arrangements.

### STATE OF THE ART

Infrared sensors are aimed to measure the infrared radiation which comes from a particular object. There are many types of infrared sensors. One of the most commonly used types are encapsulated sensors. In these types of sensors, there is an infrared detector which is located within a protective encapsulation. These sensors have proved to be reliable and accurate. However, the appearance of temporal and spatial thermal gradients in the encapsulation affects negatively the accuracy of its measurement.

Classical or conventional solutions to these problems are based in the use of sensor thermal control systems or mechanical choppers. Recently, new solutions using auxiliary detectors that present a completely blocked response to IR radiation coming from the target are starting to be used. One example of these solution may be found in the patent application US 2017/016762 A1.

However, these solutions have certain drawbacks (they cannot compensate spatial gradients and calibration of auxiliary detectors is difficult) and are not suitable for some ranges of measurements.

The present invention is aimed to solve the aforementioned problems by providing a new solution for an infrared sensor.

### DESCRIPTION OF THE INVENTION

The invention provides an alternative solution for by means of an infrared sensor according to claim 1. Preferred embodiments of the invention are defined in dependent claims.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

In a first inventive aspect, the invention provides an infrared detection device, comprising
an encapsulation housing;
at least a main infrared detector arranged inside the encapsulation housing;
at least a secondary infrared detector arranged inside the encapsulation housing;
a temperature sensor;
a control unit configured to receive data from the at least one main infrared detector, from the at least one secondary infrared detector and from the temperature sensor, and configured to provide an infrared measurement from the obtained data;
wherein
the encapsulation housing comprises at least an opening structure intended to allow infrared radiation to enter the detection device, wherein the at least one main infrared detector is arranged to see radiation from at least a portion of the opening structure and the at least one secondary infrared detector is arranged to see radiation from at least a portion of the opening structure;
the opening structure is covered by a filter which has a mean transmittance value in a first electromagnetic wavelength range greater than the mean transmittance value outside this first electromagnetic wavelength range; and
the at least one secondary infrared detector has a treatment which provides a different absorptance in the first electromagnetic wavelength range than the absorptance of the main infrared detector in the first electromagnetic wavelength range, being both absorptances higher than zero.

This device allows a measurement of the infrared radiation of a target but with a compensation of the infrared radiation of the encapsulation which is different from the ones of the known detection devices, solving the calibration problems that the prior art has. The fact that the secondary infrared detector is sensitive to infrared radiation from the outside allows their radiometric calibration of responsivity to be carried out at the same time as the calibration of the main detector. Hence, the global sensor calibration process is simplified. Further, the encapsulation housing does not need to include any additional mechanical element with respect to a standard encapsulation. This allows the standardizing of the manufacturing process and the miniaturizing the size of the encapsulation. In addition, it is ensured that the gradients seen by the detectors are not modified by these additional elements and that the exposure to thermal gradients are very similar.

In some particular embodiments, the opening structure comprises a single opening, in such a way that all the infrared detectors are arranged to see radiation from the single opening.

A single aperture allows an easy and standard manufacturing and the possibility of using multiple detectors either in a matrix or in a unidimensional array arrangement.

In some particular embodiments, the opening structure comprises a plurality of opening portions, in such a way that each infrared detector is arranged to receive at least 80% of the radiation from one of the opening portions.

This means that each infrared detector, either main or secondary, is faced against one of the opening portions and, from the whole radiation received by this infrared detector, at least 80% of this radiation comes from such opening portion. Hence, the field of view is more controlled than in the event of a single aperture for all the infrared detectors.

In some particular embodiments, the infrared detection device further comprises a plurality of opaque elements arranged to limit the field of view of each infrared detector, in such a way that each infrared detector is arranged to receive the 100% of the radiation from one of the opening portions.

These opaque elements guide the radiation so that no radiation can be received by the infrared detector except the one coming from the corresponding opening portion.

A plurality of opening portions may be used for a better definition of the field of view of each detector.

In some particular embodiments, the temperature sensor is located inside the encapsulation housing.

A location inside the encapsulation allows a more accurate value of the temperature that will be used in the calculations.

In some particular embodiments, the treatment of the secondary infrared detector comprises an interferometrical surface treatment.

The interferometrical treatment allows a definition of an ad-hoc range which is especially interesting for each application.

In some particular embodiments, the filter has a mean transmittance value in a first electromagnetic wavelength range greater than twice the mean transmittance value outside this first electromagnetic wavelength range.

In some particular embodiments, the at least one main infrared detector has a mean absorptance value in the first electromagnetic wavelength range greater than the mean absorptance value of the at least one secondary infrared detector in the first electromagnetic wavelength range.

This allows that the main detector detects the infrared radiation of the target.

In some particular embodiments, the at least one main infrared detector has a mean absorptance value outside the first electromagnetic wavelength range lower than the mean absorptance value of the at least one secondary infrared detector outside the first electromagnetic wavelength range.

In some particular embodiments, the secondary infrared detector has a mean absorptance value comprised between 5% and 25% in the first electromagnetic wavelength range.

This allows that the secondary infrared detector can detect more accurately the radiation from the encapsulate.

In some particular embodiments, the encapsulation housing has a portion which has a treatment to modify the absorptance and/or emissivity value in the first electromagnetic wavelength range.

Hence, the encapsulation may project over the secondary infrared detector the radiation in a different wavelength, so that the reflected radiation may be perceived by the secondary infrared detector much better than by the primary infrared detector.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figure 1 shows a perspective view of an infrared detection device according to the invention.
Figure 2 shows a side sectional view of this alternative, to show the different fields of view of the main detector and of the secondary detector.
Figure 3 shows an example of a graphic representation of transmittances and absorptances of the different elements of such a device, to explain the main operation principle of the invention.
Figure 4 shows the upper closure of the encapsulation housing of a second alternative of an infrared detection device 1 according to the invention.
Figure 5 shows a top view of this alternative, to see how each detector sees mostly by its own aperture portion.
Figure 6 offers an alternative embodiment for an infrared detection according to the invention.

### DETAILED DESCRIPTION OF THE INVENTION

The example embodiments are described in sufficient detail to enable those of ordinary skill in the art to embody and implement the systems and processes herein described. It is important to understand that embodiments can be provided in many alternate forms and should not be construed as limited to the examples set forth herein.

Accordingly, while embodiment can be modified in various ways and take on various alternative forms, specific embodiments thereof are shown in the drawings and described in detail below as examples. There is no intent to limit to the particular forms disclosed. On the contrary, all modifications, equivalents, and alternatives falling within the scope of the appended claims should be included. Elements of the example embodiments are consistently denoted by the same reference numerals throughout the drawings and detailed description where appropriate.

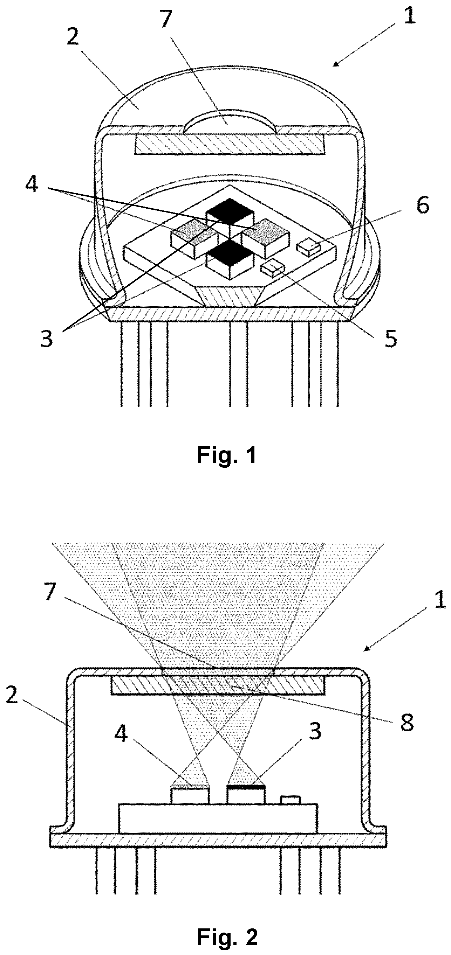

Figure 1 shows a perspective view of part of an infrared detection device 1 according to the invention, to roughly explain the arrangement of the main elements of the same. As may be seen in this figure, the device 1 comprises an encapsulation housing 2, a pair of main infrared detectors 3, a pair of secondary infrared detectors 4, a temperature sensor 5 and a control unit 6. All of these elements are arranged inside the encapsulation housing 2. A portion of the upper portion of the encapsulation housing 2 has been removed in this figure, so that the interior of the encapsulation housing 2 is clearly seen.

The control unit 6 is configured to receive data from the at least one main infrared detector 3, from the at least one secondary infrared detector 4 and from the temperature sensor 5, and configured to provide an infrared measurement from the obtained data.

The infrared detectors, both the main ones 3 and the secondary ones 4, are arranged in the same plane and are oriented according to a detection direction, which is perpendicular to said plane.

The temperature sensor 5 is also located inside the encapsulation, so that the temperature sensed by the temperature sensor is very close to the actual temperatures of the infrared detectors 3, 4.

In this figure, the encapsulation housing 2 comprises a single opening 7, in such a way that all the infrared detectors 3, 4 are arranged to see radiation from the single opening 7. This alternative involves an easy and standard manufacture but, due to the fact that not all the infrared detectors may be placed in the same location, each detector will have a different field of view of the infrared radiation coming from the outside of the detector 1.

Figure 2 shows a side sectional view of this alternative, to show the different fields of view of the main detector 3 and of the secondary detector 4. However, despite this circumstance, the main principle of working of the invention is respected, since the main detector 3 and the secondary detector 4 see from the same aperture 7 and see the radiation coming from the exterior of the detector 1 under the same conditions.

The aperture 7 has a filter 8 which reduces the wavelength range seen in the interior of the detector 1. The filter 8 has a mean transmittance value in a first electromagnetic wavelength range which is greater than twice the mean transmittance value outside this first electromagnetic wavelength range. Hence, the infrared radiation received inside the encapsulation housing in the first electromagnetic wavelength range outstands with respect of the radiation outside this range.

The secondary infrared detectors 4 has an interferometrical surface treatment which provides a different absorptance in the first electromagnetic wavelength range than the absorptance of the main infrared detector 3 in the first electromagnetic wavelength range, being both absorptances higher than zero.

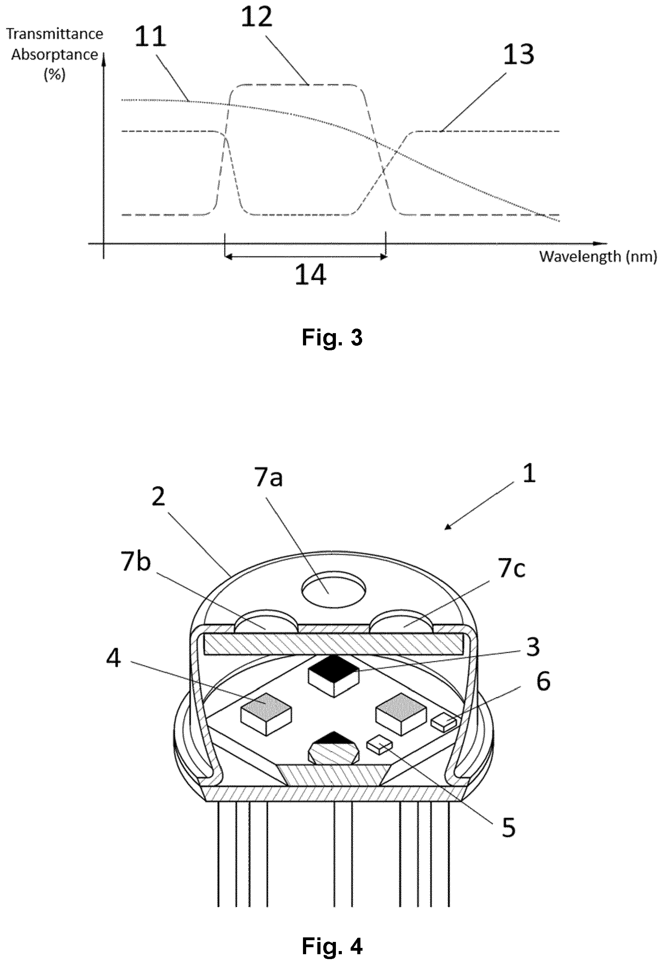

Figure 3 shows an example of a graphic representation of transmittances and absorptances of the different elements of such a device, to explain the main operation principle of the invention.

This figure presents a first line 11, which represents the absorptance of the main detectors. This absorptance decreases with the wavelength, so it is relatively high for a first wavelength range 14 and then substantially decreases for wavelengths higher than this range. There is also a second line 12 which represents the transmittance of the filter which is arranged in the opening of the device. This transmittance is high in the first wavelength range 14 and is low outside this range. Finally, there is a third line 13, which represents the absorptance of the secondary infrared detectors. This is low (but higher than zero) in the first wavelength range 14 and higher outside this range.

Hence, in the first wavelength range, the opening allows radiation to enter with a high transmittance, and the main detector have a high absorptance, but the secondary detector have a low absorptance. In other words, the radiation in the first wavelength range is perceived very well by the main detector but very badly by the secondary detector. Concerning the radiation outside this range, the filter offers a low transmittance, but the secondary detector offers a good absorptance, better than the one of the main detector (at least in a mean value). This is used to calibrate both detectors in the same action: both type of detectors see the radiation inside and outside the first wavelength range, so that calibration is possible in the same act for both calibrators.

Figure 4 shows the upper closure of the encapsulation housing of a second alternative of an infrared detection device 1 according to the invention.

In this case, the opening structure comprises a plurality of opening portions 7a, 7b, 7c, 7d, in such a way that each infrared detector 3, 4 is arranged to see radiation from one opening portion 7, 7a, 7b, 7c, 7d.

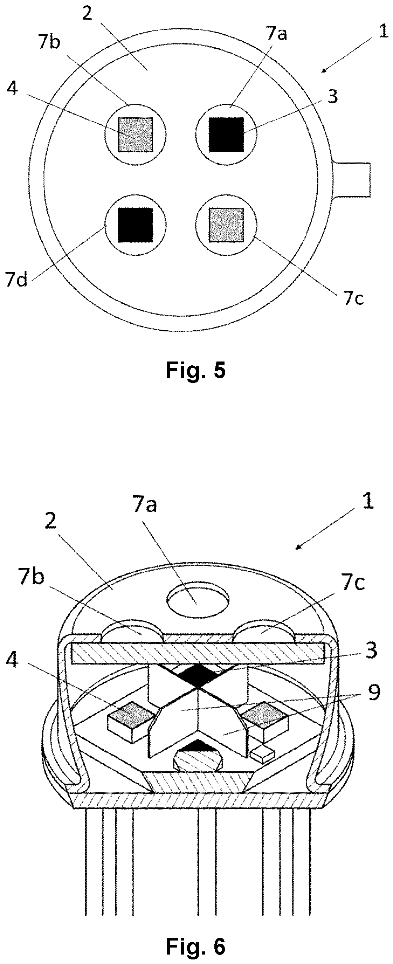

Figure 5 shows a top view of this alternative, to see how each detector mostly sees by its own aperture portion. In this case, each detector is arranged in the projection of each opening portion against the plate where the detectors are installed. In any case, it is enough that each detector may see the outer radiation across one of the opening portions.

Each main and secondary detector receive radiation data and transmit the data to the control unit. The control unit is configured to receive data from the main infrared detectors, from the secondary infrared detectors and from the temperature sensor, and solve the equations to obtain data about the infrared radiation obtained from the target.

Figure 6 offers an alternative embodiment for an infrared detection according to the invention. Based on the embodiment of Figures 4 and 5, in this embodiment, the infrared detection device 1 further comprises a plurality of opaque elements 9 arranged to limit the field of view of each infrared detector 3, 4. These opaque elements 9 have the shape of walls and, for each infrared detector, block the radiation coming from an opening portion 7a, 7b, 7c, 7d which is not the one corresponding to the infrared detector 3, 4. Hence, each infrared detector receives all the radiation from a single opening portion 7a, 7b, 7c, 7d, and the field of view of each infrared detector is more controlled.

## Claims

1. Infrared detection device (1), comprising
an encapsulation housing (2);
at least a main infrared detector (3) arranged inside the encapsulation housing (2);
at least a secondary infrared detector (4) arranged inside the encapsulation housing (2);
a temperature sensor (5);
a control unit (6) configured to receive data from the at least one main infrared detector (3), from the at least one secondary infrared detector (4) and from the temperature sensor (5), and configured to provide an infrared measurement from the obtained data; wherein
the encapsulation housing (2) comprises at least an opening structure (7, 7a, 7b, 7c, 7d) intended to allow infrared radiation to enter the detection device (1), wherein the at least one main infrared detector (3) is arranged to see radiation from at least a portion of the opening structure (7, 7a, 7b, 7c, 7d) and the at least one secondary infrared detector (4) is arranged to see radiation from at least a portion of the opening structure (7, 7a, 7b, 7c, 7d);
the opening structure (7, 7a, 7b, 7c, 7d) is covered by a filter (8) which has a mean transmittance value in a first electromagnetic wavelength range greater than the mean transmittance value outside this first electromagnetic wavelength range; and
the at least one secondary infrared detector (4) has a treatment which provides a different absorptance in the first electromagnetic wavelength range than the absorptance of the main infrared detector (3) in the first electromagnetic wavelength range, being both absorptances higher than zero.

2. Infrared detection device (1) according to claim 1, wherein the opening structure comprises a single opening (7), in such a way that all the infrared detectors (3, 4) are arranged to see radiation from the single opening (7).

3. Infrared detection device (1) according to claim 1, wherein the opening structure comprises a plurality of opening portions (7a, 7b, 7c, 7d), in such a way that each infrared detector (3, 4) is arranged to receive at least 80% of the radiation from one of the opening portions (7, 7a, 7b, 7c, 7d).

4. Infrared detection device (1) according to claim 3, further comprising a plurality of opaque elements (9) arranged to limit the field of view of each infrared detector, in such a way that each infrared detector (3, 4) is arranged to receive the 100% of the radiation from one of the opening portions (7, 7a, 7b, 7c, 7d).

5. Infrared detection device (1) according to any of the preceding claims, wherein the temperature sensor (5) is located inside the encapsulation housing (2).

6. Infrared detection device (1) according to any of the preceding claims, wherein the treatment of the secondary infrared detector (4) comprises an interferometrical surface treatment.

7. Infrared detection device (1) according to any of the preceding claims, wherein the filter (8) has a mean transmittance value in a first electromagnetic wavelength range greater than twice the mean transmittance value outside this first electromagnetic wavelength range.

8. Infrared detection device (1) according to any of the preceding claims, wherein the at least one main infrared detector (3) has a mean absorptance value in the first electromagnetic wavelength range greater than the mean absorptance value of the at least one secondary infrared detector (4) in the first electromagnetic wavelength range.

9. Infrared detection device (1) according to any of the preceding claims, wherein the at least one main infrared detector (3) has a mean absorptance value outside the first electromagnetic wavelength range lower than the mean absorptance value of the at least one secondary infrared detector (4) outside the first electromagnetic wavelength range.

10. Infrared detection device (1) according to any of the preceding claims, wherein the secondary infrared detector (4) has a mean absorptance value lower than half the mean absorptance value of the main infrared detector in the first electromagnetic wavelength range.

11. Infrared detection device (1) according to any of the preceding claims, wherein the encapsulation housing (2) has a portion which has a treatment to modify the absorptance and/or emissivity value in the first electromagnetic wavelength range.
